# EUROPÄISCHE PATENTANMELDUNG

(11) **EP 1 914 864 A2**
(43) Veröffentlichungstag der Anmeldung: **23.04.2008**
(21) Anmeldenummer: 07020489.6
(22) Anmeldetag: 19.10.2007
(51) Int. Cl.: H02K 1/28, H02K 1/27

(54) **Anordnung zur Befestigung von Permanentmagneten an schnell drehenden Rotoren von elektrischen Maschinen**

(30) Priorität: 21.10.2006 DE 102006049825
(71) Anmelder: ESW GmbH, 22880 Wedel (DE)
(72) Erfinder: Grünhagen, Thomas, 42549 Velbert (DE)
(74) Vertreter: Freitag, Joachim

(57) **Zusammenfassung**

Die Erfindung betrifft eine Anordnung zur Befestigung von Permanentmagneten an schnell drehenden Rotoren von elektrischen Maschinen.

Die Aufgabe, eine neue Möglichkeit zur Befestigung von Permanentmagneten am Rotor von schnell drehenden elektrischen Maschinen zu finden, die für hohe Drehzahlen und unter beengten Platzverhältnissen ohne kraftschlüssige Verbindung von Magnethalterungen am Rotor (1) eine fliehkraftsichere Magnetfixierung gestattet, wird bei am äußeren Umfang des Rotors (1) angeordneten Permanentmagneten (2) mit abwechselnd zwischengeordneten Profilteilen (3) erfindungsgemäß gelöst, indem in die Außenfläche des Rotors (1) koaxial verlaufende Rotornuten (11) eingebracht sind, deren Schenkel bezüglich der Radialrichtung nach außen wenigstens stückweise konvergierende Kontaktflächen für angepasst divergierende Kontaktflächen (3a, 3b, 3c) der Profilteile (3) aufweisen, und die Profilteile (3) so geformt sind, dass sie paarweise klauenförmig die Permanentmagneten (2) gegen Radialkräfte der Rotordrehung formschlüssig zurückhalten. Fertigungstechnisch unvermeidbare Spalte an den Kontaktflächen werden durch ein flüssiges aushärtbares Medium (4) ausgefüllt.

## Beschreibung

Die Erfindung betrifft eine Anordnung zur Befestigung von Permanentmagneten an schnell drehenden Rotoren von elektrischen Maschinen.
Sie findet vorzugsweise Anwendung bei besonderen Anforderungen an die mechanische Festigkeit bei hohen Umfangsgeschwindigkeiten und hohen Betriebstemperaturen sowie die Unterdrückung von Wirbelströmen.

Im Stand der Technik sind Anordnungen bekannt geworden, bei denen die Magnete mittels eines Klebers auf einen magnetisierbaren Rotorträger befestigt und durch eine unmagnetische Bandage auf ihrem Sitz fixiert sind. Diese Methode ist in ihren Einsatzmöglichkeiten beschränkt aufgrund der begrenzten Haltekraft von Klebstoffen bei erhöhten Temperaturen und großen Fliehkräften infolge der hohen Drehzahlen.
Bei einem anderen Lösungsansatz werden die Magnete in einem Blechpaket "vergraben". Die letztere Methode kann nur bei bestimmten mechanischen und magnetischen Auslegungen angewandt werden und reduziert die magnetische Ausnutzung des Systems.

Eine andere Sicherungsart für Magnete am Rotor stellen geschlossene Ummantelungen (Bandagen) dar. Unmagnetische Bandagen sind im Stand der Technik sowohl aus nichtmetallischen Materialien wie z.B. Glasfasern, Kohlefasern, verschiedenen Kunststoffen als auch aus Metallen, wie beispielsweise unmagnetischem Stahl, Aluminium oder Titan, bekannt. Während Bandagen aus elektrisch leitendem Material meist den Nachteil haben, dass infolge Wirbelstrombildung die Rotorteile zusätzlich erwärmt werden, sind Bandagen aus Kunstfasern häufig trotz hohen Fertigungsaufwandes unter erhöhter Temperaturbelastung nicht ausreichend stabil (d.h. sie zeigen unzulässige Dehnbarkeit).

In der Patentschrift US 6,603,232 B2 ist eine Permanentmagnet-Haltevorrichtung für Hochgeschwindigkeitsrotoren offenbart, bei der die Permanentmagnete in der äußeren Rotorhülle in invertierte U-förmige Rückhalteteile eingelegt sind, die entweder durch kraftschlüssig an die Rotorhülle geschraubte Polstücke gehaltert werden und direkt mittels Verschraubung mit dem Rotor kraftschlüssig verbunden sind. Nachteilig an dieser kraftschlüssigen Variante ist vor allem die Gefahr des selbsttätigen Lösens der Verschraubung infolge von Vibrationen, die zur Minderung des Sicherheitsrisikos stets noch eine stabile Außenbandage erforderlich macht.

Der Erfindung liegt die Aufgabe zugrunde, eine neue Möglichkeit zur Befestigung von Permanentmagneten am Rotor von schnell drehenden elektrischen Maschinen zu finden, die für hohe Drehzahlen und hohe Temperaturbelastung unter beengten Platzverhältnissen eine zuverlässige Befestigung der Permanentmagnete gestattet, ohne eine kraftschlüssige Verschraubung von magnethaltenden Teilen am Rotor zu benötigen. Zusätzlich sollen Wirbelströme in den Befestigungsteilen gering gehalten werden. Eine erweiterte Aufgabe besteht in der Sicherung der Magnete und Magnethalterungen gegen äußere Beschädigung und deren Abfliegen durch Materialbruch.

Erfindungsgemäß wird die Aufgabe bei einer Anordnung zur Befestigung von Permanentmagneten an schnell drehenden Rotoren von elektrischen Maschinen mit mehreren am äußeren Umfang eines zylinderförmigen weichmagnetischen Rotors befestigten Permanentmagneten, die durch abwechselnd zwischengeordnete keil- oder klauenförmige Profilteile am Rotor befestigt sind, dadurch gelöst, dass in die Außenfläche des Rotors koaxial verlaufende Rotornuten eingebracht sind, deren Schenkel bezüglich der Radialrichtung nach außen wenigstens stückweise konvergierende Kontaktflächen für angepasst divergierende Kontaktflächen der Profilteile aufweisen, um den Profilteilen formschlüssigen Halt gegen Fliehkräfte zu bieten, und dass die Profilteile aus nichtmagnetischem Material so geformt sind, dass sie paarweise klauenförmig die Permanentmagneten formschlüssig gegen Fliehkräfte der Rotordrehung zurückhalten.

Vorteilhaft werden fertigungsbedingte Spalte an den Kontaktflächen der Profilteile gegenüber den Rotornuten und den Permanentmagneten mit einem flüssigen aushärtbaren Medium gefüllt.

Benachbarte Rotornuten bilden zweckmäßig einen Rotorsteg mit bezüglich der Radialrichtung nach außen divergierenden Kontaktflächen, auf den jeweils ein zum Rotorsteg formschlüssiges Profilteil longitudinal aufgeschoben ist, wobei die Permanentmagnete in die Rotornuten eingebettet sind und von divergierenden Kontaktflächen der Profilteile formschlüssig gehalten werden.

In einer zweiten Gestaltung wird vorteilhaft in schmale Rotornuten jeweils ein Profilteil formschlüssig eingeschoben, so dass die Permanentmagnete auf der Außenfläche des Rotors angeordnet sind und von divergierenden Kontaktflächen zweier benachbarter Profilteile klauenförmig formschlüssig gehalten werden.

In einer dritten zweckmäßigen Ausführung wird in die schmalen Rotornuten jeweils ein Koppelprofil eingeschoben, das zugleich in eines der Profilteile formschlüssig eingreift, wobei die Permanentmagnete auf der Außenfläche des Rotors angeordnet sind und von divergierenden Kontaktflächen zweier benachbarter Profilteile klauenförmig formschlüssig gehalten werden. Auch hier werden die fertigungsbedingten Spalte zwischen den Kontaktflächen der Profilteile, der Koppelprofile, der Rotornuten und der Magnete mit einem flüssigen aushärtbaren Medium ausgefüllt.

Vorteilhaft weisen die Rotorstege eine Grundstruktur von T-Profilen auf, können aber auch zweckmäßig zu Dreiecks- oder Rundprofilen abgewandelt sein.
Die gleichen Formmerkmale treffen auch für die Rotornuten zu, die ebenfalls als kopfstehende T-Profile ausgebildet sind und zu vergrabenen Rundnuten oder Dreiecksnuten (sog. Schwalbenschwanzführung) entartet sein können.

Für die vorstehend genannte dritte Befestigungsvariante der Permanentmagnete mittels Profilteilen und Koppelprofilen haben die Koppelprofile vorzugsweise eine symmetrische, als Doppel-T-Profil ausgebildete Querschnittsfläche, bei der spiegelsymmetrisch angeordnete Dreiecks- oder Rundformen die auskragenden Enden des Koppelprofils bilden können.

Die Profilteile weisen im äußere Teil ihrer Querschnittsform vorzugsweise eine breite Keilform auf oder können eine Art T-Profil darstellen, wobei sie bezüglich einer Radialebene des Rotors symmetrisch sind. Aufgrund dieser Symmetrie können die Profilteile vorteilhaft auch als geteilte Profilstänge zusammengesetzt sein.

Zur Verringerung von Wirbelströmen bestehen die Profilteile vorteilhaft aus einer Vielzahl dünner Einzelbleche, die als Stapel einen Profilstrang bilden und zur vereinfachten Montage der gestapelten Bleche vorzugsweise mittels eines Klebers starr miteinander verbunden sind.

Zweckmäßig wird auch der Rotor aus einer Vielzahl kreisringförmiger Elektrobleche gefertigt, die gestapelt, vorzugsweise mittels eines innenliegenden separaten Rotorträgers, arretiert werden.
In beiden Fällen (geblätterte Profilteile und Rotorperipherie) können die einzelnen Bleche zweckmäßig durch eine nicht leitende Zwischenschicht gegeneinander isoliert sein. Die Bleche können einerseits durch eine mindestens einseitige Beschichtung, durch eine Folie oder eine Kleberschicht gegeneinander isoliert sein.

Zum Schutz vor einer äußeren Beschädigung sowie einem Abfliegen von Bruchstücken kann der Rotor mit den an seinem äußeren Umfang formschlüssig longitudinal eingeschobenen Profilteilen und Permanentmagneten zusätzlich von einer Bandage umschlossen sein.
Vorzugsweise besteht eine solche Bandage mindestens aus einem einlagig gewickelten Draht und einer aushärtenden isolierenden Vergussmasse. Dabei ist der Draht zweckmäßig so gewickelt, dass die einzelnen Windungen untereinander keinen elektrischen Kontakt haben. Es erweist sich von Vorteil, wenn zwischen dem von Profilteilen und Permanentmagneten gebildeten äußeren Umfang des Rotors und dem gewickelten Draht eine Isolierschicht vorhanden ist.
Vorzugsweise wird der Draht mit einer exakt definierten Vorspannung um die Profilteile und die Magnete gewickelt, so dass eine Vorspannung der Magnete gegen in radialer Richtung auftretende Fliehkräfte vorhanden ist.

Die Erfindung fußt auf der Grundüberlegung, dass mit steigenden Drehzahlen eines Rotors die Fliehkräfte zunehmen, so dass die bei einer elektrischen Selbsterregermaschine (Motor oder Generator) vorhandenen Permanentmagnete radial nach außen beschleunigt werden und entsprechend zuverlässig gesichert sein müssen. Bisherige Befestigungsarten für Permanentmagnete sind durch Verschraubung oder Verklebung der Magnete insbesondere bei hohen Drehzahlen und hohen Temperaturen problematisch, weil einerseits die Gefahr eines selbsttätigen Lösens der Verschraubungen besteht und andererseits verfügbare Kleber bei Erwärmung unter den auftretenden großen Radialkräften duktiles und somit nicht stabiles Verhalten zeigen. Ebenfalls bekannte Bandagen aus Kunststofffasern zur Magnetbefestigung haben den Nachteil, dass sie sich bei hohen Drehzahlen unzulässig stark dehnen und metallische Rotorummantelungen führen zur Temperaturerhöhung durch weitere Wirbelstrombildung.

Die Erfindung löst diese vielschichtigen Probleme, indem die Magnete auf dem Rotor formschlüssig durch keilförmig klauenähnliche Profilteile gehaltert werden, die selbst als keilförmige Formteile in longitudinalen Rotornuten formschlüssig befestigt sind.
Dabei ist die Montage einfach zu realisieren durch longitudinales Einschieben der Profilteile in die aufeinander abgestimmten Profilquerschnitte von Magnetsträngen, Rotornuten oder Rotorstegen. In fertigungsbedingte Spalte zwischen den unterschiedlichen Profilen wird eine flüssige aushärtbare Vergussmasse eingebracht, die nach dem Aushärten eine feste Verbindung zwischen Rotor, Magneten und Profilteilen ergibt, wobei an den durch Radialkräfte belasteten Kontaktflächen ausschließlich eine Druckbelastung stattfindet, so dass die ausgehärtete Vergussmasse keine besondere Zugfestigkeit aufweisen muss.

Mit der Erfindung ist es möglich, Permanentmagnete am Rotor von schnell drehenden elektrischen Maschinen derart zu befestigen, dass diese für hohe Drehzahlen und hohe Temperaturbelastung unter beengten Platzverhältnissen ohne eine kraftschlüssige Verbindung zuverlässig und dauerhaft gegen mechanische, insbesondere durch Radialkräfte verursachte Belastungen gesichert sind. Durch zusätzliche Maßnahmen werden Wirbelströme in Polstücken und Befestigungsteilen gering gehalten und die Magnete und Magnethalterungen gegen äußere Beschädigung und Abfliegen infolge von Materialbruch gesichert.

Die Erfindung soll nachstehend anhand von Ausführungsbeispielen näher erläutert werden. Die Zeichnungen zeigen:
- Fig. 1:: einen peripheren Ausschnitt vom Rotorquerschnitt mit einer Prinzipansicht einer erfindungsgemäßen Befestigung der Permanentmagnete mittels an den Flanken von koaxial ausgerichteten Rotornuten formschlüssig radial verankerten Profilteilen,
- Fig. 2:: sechs Ausgestaltungsformen für die Profilteile in einer ersten Befestigungsvariante für die Permanentmagnete, bei der die Stege zwischen den Rotornuten des Rotors direkt in die Profilteile eingreifen,
- Fig. 3:: drei Ausgestaltungen der Profilteile für eine zweite Befestigungsvariante, bei der die Profilteile direkt in geeignet geformte Rotornuten eingreifen,
- Fig. 4:: drei Ausgestaltungen der Profilteile für eine dritte Befestigungsvariante, bei der geeignete geformte Koppelprofile sowohl in die Profilteile als auch in die Rotornuten eingreifen,
- Fig. 5:: eine schematische Darstellung des Montageprinzips der erfindungsgemäßen Magnetbefestigung mit koaxialem Einschub der Permanentmagnete und der Profilteile in die Rotornuten,
- Fig. 6:: einen Längsschnitt durch den Rotor entlang der Ebene A-A, gemäß der Darstellung von Fig. 4a, in einer Schnittdarstellung durch sämtliche drei lasttragenden Kontaktflächen des Profilteils und des Koppelprofils.

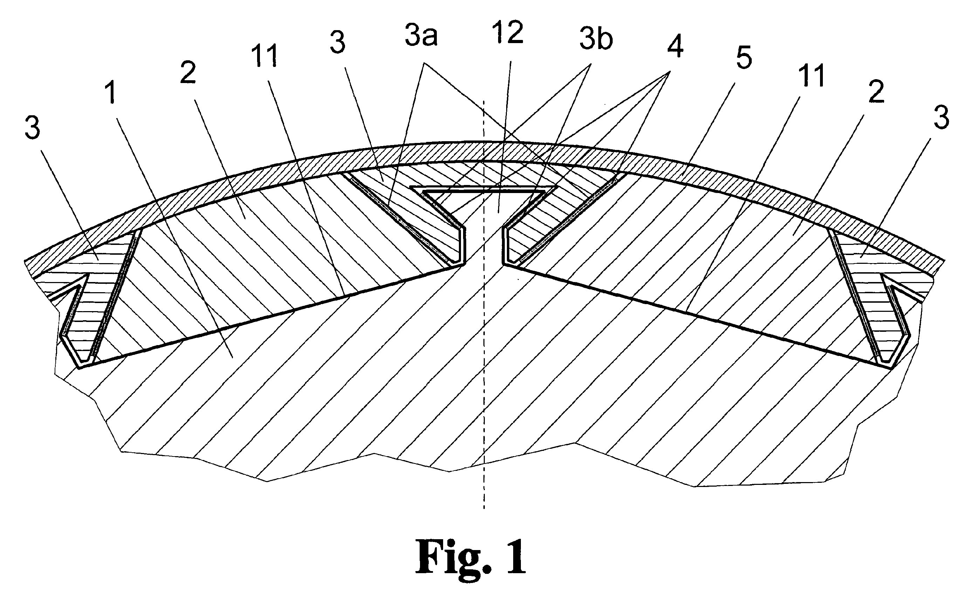

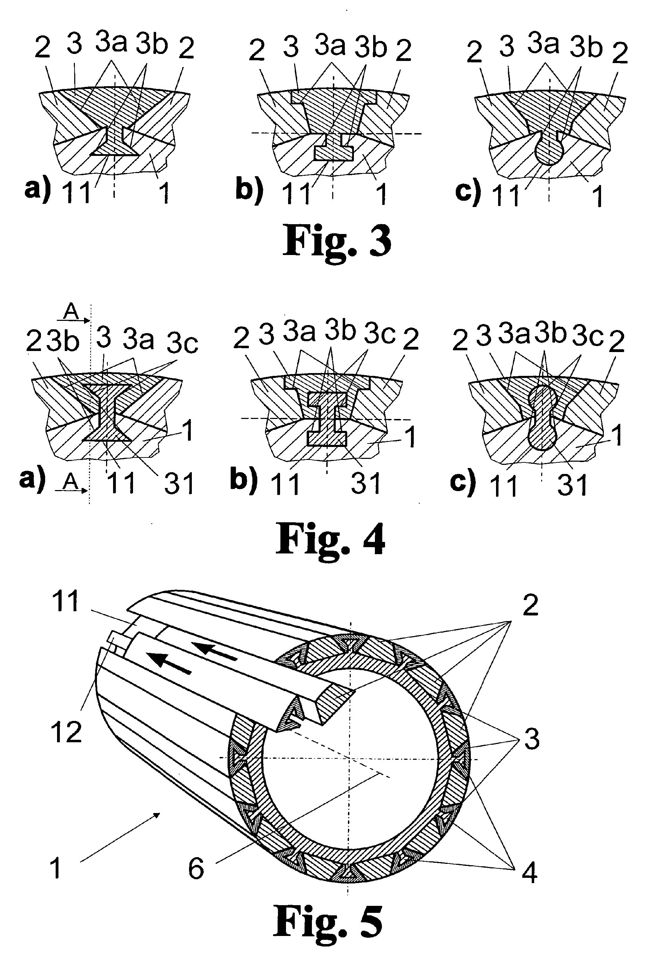

Die Erfindung besteht in ihrem Grundaufbau - wie Fig. 1 in Zusammenschau mit Fig. 5 ersichtlich - aus einem als zylindrischer Körper geformten Rotor 1, an dessen Peripherie longitudinal ausgerichtete Permanentmagnete 2 gleichverteilt angeordnet und durch zwischengeordnete, radial klauen- oder keilförmig übergreifende Profilteile 3 mit paarweise symmetrisch divergierenden Kontaktflächen 3a und 3b am Rotor 1 befestigt sind. Dabei halten die Profilteile 3 die Permanentmagnete 2 mittels - in Radialrichtung nach außen betrachtet - paarweise divergierenden Kontaktflächen 3a und die Profilteile 3 selbst sind ebenfalls über paarweise divergierende Kontaktflächen 3b am Rotor 1 an den Schenkeln von Rotornuten 11 bzw. dazwischen liegenden Rotorstegen 12 formschlüssig gegen Radialkräfte verankert.
Die so definierten Profile sind aneinander angepasst, d.h. die Formen der Schenkel der Rotornuten 11 bzw. Rotorstege 12 und der Schenkel der Permanentmagneten 2 weisen parallel verlaufende Oberflächen zu je einem der zwei Flankenpaare mit den Kontaktflächen 3a und 3b der Profilteile 3 auf.
Zur Befestigung der Permanentmagnete 2 und der Profilteile 3 am Rotor 1 werden diese longitudinal in die Rotornuten 11 eingeschoben. Dabei verbleibende fertigungstechnisch unvermeidbare Lücken (Spalte) werden mit einem flüssigen und aushärtbaren Medium 4 gefüllt. Das Medium 4 wird nach dem Eingießen durch eine chemische Reaktion und/oder thermische Behandlung zum vollständigen Aushärten gebracht, so dass eine feste, formschlüssige Verbindung zwischen dem Rotor 1 und den Magneten 2 entsteht.
Durch die geeignete Wahl der Verbindungsgeometrie ist sichergestellt, dass an den Oberflächenbereichen 3a und 3b der Profilteile 3 zu den Magneten 2 und zu den Rotornuten 11 bzw. Rotorstegen 12 das ausgehärtete spaltfüllende Medium 4 ausschließlich auf Druck beansprucht wird und die radialen Zugkräfte (Fliehkräfte) allein von den Profilteilen 3 und von den Schenkeln der Rotornuten 12 aufgenommen werden. Eine relativ geringe Zugfestigkeit des spaltfüllenden Mediums 4 hat somit keinen Einfluss auf die maximal übertragbaren Kräfte, da diese nahezu ausschließlich durch die Zugfestigkeit und die geometrische Formgestaltung der Profilteile 3 und der Rotornuten 11 bzw. der Rotorstege 12 bestimmt sind.

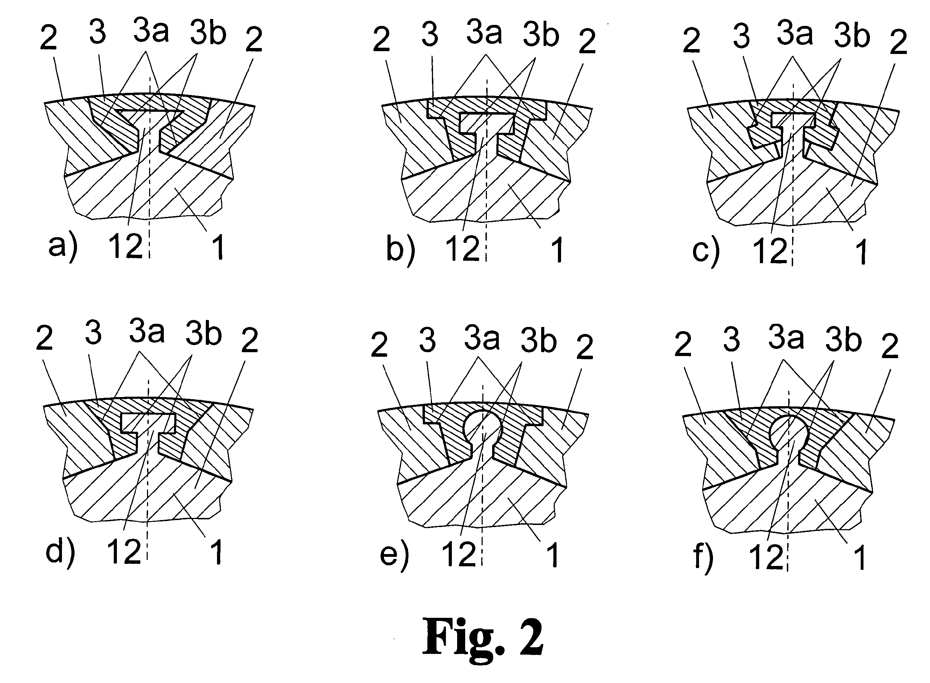

Fig. 2 zeigt in den Teilfiguren a) bis f) - ohne Beschränkung der möglichen Mannigfaltigkeit der Formen - Beispiele für Geometrien von angepassten Rotorstegen 12, Profilteilen 3 und Permanentmagneten 2. Dabei handelt es sich um eine erste Grundvariante zur Befestigung der Magnete 2, bei der die Profilteile 3 auf einen Rotorsteg 12 entlang von Mantellinien des Rotors 1 aufgeschoben werden.
Als Profil des Rotorsteges 12 ist grundsätzlich eine T-Form anzusehen, die von einer breiten Keilform (stumpfwinkliges gleichschenkliges Dreieck; Fig. 2, Teilabbildung a) über eckig ausgeprägte (Darstellungen b, c und d) bis hin zu kreisförmig gerundeten T-Profil-Formen (Darstellungen e und f) reicht.

In Fig. 3 sind - ohne Beschränkung der möglichen Vielfalt der Formen - drei Ausgestaltungen für eine zweite Befestigungsvariante der Permanentmagnete 2 am Rotor 1 gezeigt.
Bei dieser Befestigungsvariante sind die Profilteile 3 in eine schmale Rotornut 11 eingeschoben. Die Profilteile 3 weisen dazu eine an die Rotornut 11 angepasste Anformung auf, die wie die für die Rotorstege 12 (in Fig. 2) offenbarten Profile gestaltet sein kann. Die für die Magnete 2 angeformten Kontaktflächen 3a werden - in Analogie zu denen von Fig. 2 - stark keilförmig bis tangential auskragend gestaltet, um die Magnete 2 in gleicher Weise formschlüssig gegen radiale Kraftwirkungen mit einer ausreichenden Randüberdeckung zu sichern.

Fig. 4 zeigt eine dritte Befestigungsvariante, bei der im Rotor 1 die Rotornuten 11 in gleicher Weise wie im Beispiel nach Fig. 3 vorhanden sind, in die jedoch jeweils ein Koppelprofil 31 mit einer Doppel-T-Form den Formschluss zu den Profilteilen 3 herstellt. Die Profilteile 3 können dann Formen, wie in Fig. 2 beispielhaft gezeigt, aufweisen.

Die Montage der Magnete 2 und der Profilteile 3 sowie gegebenenfalls eingefügter Koppelprofile 31 erfolgt gemäß der Prinzipdarstellung von Fig. 5.
Obwohl nur für die erste Befestigungsvariante gemäß Fig. 1 und 2a gezeigt, kann der Fachmann leicht erschließen, dass für die zweite und dritte Befestigungsvarianten die Montage in gleicher Weise durch longitudinales Einschieben der Profilteile 3 in die Rotornuten 11 erfolgt. Es sei darauf hingewiesen, dass nicht in jedem Fall (wie in Fig. 5 durch den Pfeil auf dem Magnet 2 gekennzeichnet) die Magnete 2 longitudinal eingeschoben werden müssen.

Vielmehr können diese in den meisten Fällen einfach in radialer Richtung eingelegt werden und nur die Profilteile 3 sind abschließend longitudinal einzuschieben.
Aus Übersichtsgründen wurde auf die Darstellung des spaltfüllenden Mediums 4 sowie einer optionalen Bandage 5 verzichtet.
Das spaltfüllende Medium 4 wird nach erfolgter formschlüssiger Montage durch Eintauchen in ein niederviskoses aushärtbares Medium, wie z.B. mehrkomponentiges Epoxydharz oder Polyesterharz in die Spalte zwischen den Magneten 2, Profilteilen 3 (sowie ggf. vorhandenen Koppelprofilen 31) und Rotorstegen 12 (bzw. Rotornuten 11) eingebracht. Das Aushärten erfolgt durch eine chemische Reaktion und kann durch eine gezielte Erwärmung beschleunigt und in den Eigenschaften optimiert werden.

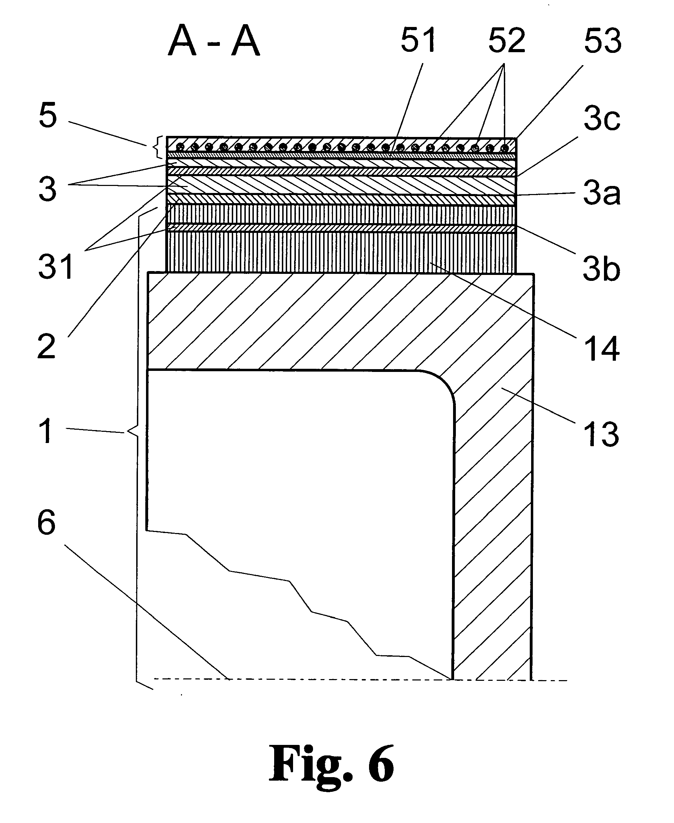

Fig. 6 zeigt eine Komplettierungsvariante für den Hochgeschwindigkeitsrotor durch eine Bandage 5 zum funktionssicheren peripheren Abschluss der äußeren Funktionsschicht des Rotors 1 aus Magneten 2 und Profilteilen 3.
Um die Permanentmagnete 2 vor äußeren Beschädigungen zu schützen und ein Abfliegen von Bruchstücken zu verhindern, werden die in den vorhergehenden Beispielen beschriebenen Rotorgestaltungen mit einer zusätzlichen Bandage 5 versehen. Bei der erfindungsgemäßen Rotoranordnung wird zur Vermeidung von zusätzlicher Wärmeentwicklung (durch Wirbelstromverluste in Metallbandagen) und unerwünschtem Dehnungsrisiko (trotz hohen Fertigungsaufwandes bei Kunstfaserbandagen) eine Bandage 5 zum Schutz der Magnete 2 vor äußeren Beschädigungen und zum Schutz vor dem Herausfliegen von Magnetstücken unter Verwendung von nichtmagnetischem Draht 52 hergestellt. Dazu wird zunächst die äußere Oberfläche der Magnete mit einer dünnen, elektrisch und magnetisch nicht leitenden Trennfolie 51 überzogen. Anschließend wird der dünne, nichtmagnetische Draht 52 (z.B. VA-Stahl, Titan, etc.) schraubenförmig um die mit der Trennfolie 51 belegte äußere Schicht des Rotors 1, gebildet aus Magneten 2 und Keilen 3, gewickelt. Dabei ist darauf zu achten, dass sich die einzelnen Windungen des Drahtes 52 untereinander nicht berühren. Nachdem der gesamte Außenumfang des Rotors 1 schraubenförmig umwickelt wurde, werden die Windungen des Drahtes 52 mit einer flüssigen Vergussmasse 53 umgossen oder getaucht. Nach dem Aushärten der Vergussmasse 53 ergibt sich eine sehr strapazierfähige Bandage 5.
Zur Vereinfachung der Herstellung des kompletten Maschinenteils kann als Vergussmasse 63 dasselbe Material wie für das spaltfüllende Medium 4 zwischen den Profilteilen 3 und dem Rotor 1 sowie den Magneten 2 (zur Fixierung der Oberflächenbereiche 3a, 3b und ggf. 3c) verwendet werden und das Vergießen und das anschließende Aushärten in einem Arbeitsgang geschehen.

### Bezugszeichenliste

- 1: Rotor
- 11: Rotornut
- 12: Rotorsteg
- 13: Rotorträger
- 14: Rotorblechpaket

- 2: Magnet (Permanentmagnet)

- 3: Profilteile
- 3a: divergierende Kontaktfläche (gegen Magneten)
- 3b: divergierende Kontaktfläche (gegen Rotor)
- 3c: divergierende Kontaktfläche (gegen Formstück)
- 31: Koppelprofil

- 4: (spaltfüllendes) Medium

- 5: Bandage
- 51: Trennfolie
- 52: Draht
- 53: Vergussmasse

- 6: Rotorachse

## Patentansprüche

1. Anordnung zur Befestigung von Permanentmagneten an schnell drehenden Rotoren von elektrischen Maschinen mit mehreren am äußeren Umfang eines zylinderförmigen weichmagnetischen Rotors befestigten Permanentmagneten, die durch abwechselnd zwischengeordnete keil- oder klauenförmige Profilteile am Rotor befestigt sind, **dadurch gekennzeichnet, dass**
- in die Außenfläche des Rotors (1) koaxial verlaufende Rotornuten (11) eingebracht sind, deren Schenkel bezüglich der Radialrichtung nach außen wenigstens stückweise konvergierende Kontaktflächen für angepasst divergierende Kontaktflächen (3a, 3b, 3c) der Profilteile (3) aufweisen, um den Profilteilen (3) formschlüssigen Halt gegen Fliehkräfte zu bieten, und
- die Profilteile (3) aus nichtmagnetischem Material so geformt sind, dass sie paarweise klauenförmig die Permanentmagneten (2) formschlüssig gegen Fliehkräfte der Rotordrehung zurückhalten.

2. Anordnung nach Anspruch 1, **dadurch gekennzeichnet, dass**
fertigungsbedingte Spalte an den Kontaktflächen (3a, 3b, 3c) der Profilteile (3) gegenüber den Rotornuten (11) und den Permanentmagneten (2) mit einem flüssigen aushärtbaren Medium (4) gefüllt sind.

3. Anordnung nach Anspruch 1, **dadurch gekennzeichnet, dass**
benachbarte Rotornuten (11) einen Rotorsteg (12) mit bezügliche der Radialrichtung nach außen divergierenden Kontaktflächen (3b) bilden, auf den jeweils ein zum Rotorsteg (12) formschlüssiges Profilteil (3) longitudinal aufgeschoben ist, wobei die Permanentmagneten (2) in die Rotornuten (11) eingebettet sind und von divergierenden Kontaktflächen (3a) der Profilteile (3) formschlüssig gehalten werden.

4. Anordnung nach Anspruch 1, **dadurch gekennzeichnet, dass**
in die Rotornuten (11) jeweils ein Profilteil (3) formschlüssig eingeschoben ist, so dass die Permanentmagnete (2) auf der Außenfläche des Rotors (1) angeordnet sind und von divergierenden Kontaktflächen (3a) zweier benachbarter Profilteile (3) klauenförmig formschlüssig gehalten werden.

5. Anordnung nach Anspruch 1, **dadurch gekennzeichnet, dass**
in die Rotornuten (11) jeweils ein Koppelprofil (31) eingeschoben ist, das zugleich in eines der Profilteile (3) formschlüssig eingreift, wobei die Permanentmagnete (2) auf der Außenfläche des Rotors (1) angeordnet sind und von divergierenden Kontaktflächen (3a) zweier benachbarter Profilteile (3) klauenförmig formschlüssig gehalten werden.

6. Anordnung nach Anspruch 5, **dadurch gekennzeichnet, dass** fertigungsbedingte Spalte zwischen den Kontaktflächen der Profilteile (3), der Koppelprofile (31), der Rotornuten (11) und der Permanentmagnete (2) mit einem flüssigen aushärtbaren Medium (4) gefüllt sind.

7. Anordnung nach Anspruch 1, **dadurch gekennzeichnet, dass**
die Rotornuten (11) die Form von T-Profilen aufweisen.

8. Anordnung nach Anspruch 1, **dadurch gekennzeichnet, dass**
die Rotornuten (11) die Form von Dreieckprofilen aufweisen.

9. Anordnung nach Anspruch 1, **dadurch gekennzeichnet, dass**
die Rotornuten (11) die Form von Rundprofilen aufweisen.

10. Anordnung nach Anspruch 3, **dadurch gekennzeichnet, dass**
die Rotorstege (12) die Form von T-Profilen aufweisen.

11. Anordnung nach Anspruch 3, **dadurch gekennzeichnet, dass**
die Rotorstege (12) die Form von Dreieckprofilen aufweisen.

12. Anordnung nach Anspruch 3, **dadurch gekennzeichnet, dass**
die Rotorstege (12) die Form von Rundprofilen aufweisen.

13. Anordnung nach Anspruch 5, **dadurch gekennzeichnet, dass**
die Koppelprofile (31) die Form von Doppel-T-Profilen aufweisen.

14. Anordnung nach Anspruch 5, **dadurch gekennzeichnet, dass**
die Koppelprofile (31) die Form von spiegelsymmetrischen doppelten Dreieckprofilen aufweisen.

15. Anordnung nach Anspruch 5, **dadurch gekennzeichnet, dass**
die Koppelprofile (31) die Form von spiegelsymmetrischen doppelten Rundprofilen aufweisen.

16. Anordnung nach Anspruch 1, **dadurch gekennzeichnet, dass**
die Profilteile (3) einen bezüglich der Radialrichtung symmetrischen Querschnitt aufweisen.

17. Anordnung nach Anspruch 16, **dadurch gekennzeichnet, dass**
die Profilteile (3) im äußeren Teil ihres Querschnitts eine breite Keilform aufweisen.

18. Anordnung nach Anspruch 16, **dadurch gekennzeichnet, dass**
die Profilteile (3) im äußeren Teil ihres Querschnitts eine Art T-Profil aufweisen.

19. Anordnung nach Anspruch 16, **dadurch gekennzeichnet, dass**
die Profilteile (3) aus zwei entlang ihrer Symmetrieebene geteilten Profilsträngen zusammengesetzt sind.

20. Anordnung nach Anspruch 1, **dadurch gekennzeichnet, dass**
die Profilteile (3) aus einer Vielzahl dünner Einzelbleche bestehen, die als Stapel einen Profilstrang bilden.

21. Anordnung nach Anspruch 20, **dadurch gekennzeichnet, dass**
die Einzelbleche durch eine nichtleitende Zwischenschicht gegeneinander isoliert sind.

22. Anordnung nach Anspruch 21, **dadurch gekennzeichnet, dass**
die Einzelbleche durch eine mindestens einseitige Beschichtung gegeneinander isoliert sind.

23. Anordnung nach Anspruch 21, **dadurch gekennzeichnet, dass**
die Einzelbleche durch eine Folie gegeneinander isoliert sind.

24. Anordnung nach Anspruch 20, **dadurch gekennzeichnet, dass**
die gestapelten Einzelbleche durch Kleben starr miteinander verbunden sind.

25. Anordnung nach Anspruch 1, **dadurch gekennzeichnet, dass**
der Rotor (1) als rohrförmiger Körper (14) aus einer Vielzahl kreisringförmiger Elektrobleche besteht, die auf einem innenliegenden separaten Rotorträger (13) gestapelt arretiert sind.

26. Anordnung nach Anspruch 1, **dadurch gekennzeichnet, dass**
der Rotor (1) mit den am äußeren Umfang formschlüssig koaxial eingeschobenen Profilteilen (3) und Permanentmagneten (2) von einer Bandage (5) umhüllt ist.

27. Anordnung nach Anspruch 26, **dadurch gekennzeichnet, dass**
die Bandage (5) mindestens aus einem einlagig gewickelten Draht (52) und einer aushärtenden isolierenden Vergussmasse (53) besteht.

28. Anordnung nach Anspruch 27, **dadurch gekennzeichnet, dass**
der Draht (52) so schraubenförmig um den Rotor (1) gewickelt ist, dass die einzelnen Drahtwindungen keinen elektrischen Kontakt zu den Nachbarwindungen aufweisen.

29. Anordnung nach Anspruch 28, **dadurch gekennzeichnet, dass**
zwischen den Profilteilen (3) und Permanentmagneten (2) am äußeren Umfang des Rotors (1) und dem gewickelten Draht (52) eine Isolierschicht (51) angeordnet ist.

30. Anordnung nach Anspruch 28, **dadurch gekennzeichnet, dass**
der Draht (52) mit einer exakt definierten Vorspannung um die Profilteile (3) und die Magnete (2) gewickelt ist, so dass eine Vorspannung der Magnete gegen in radialer Richtung auftretende Fliehkräfte vorhanden ist.
